# EUROPEAN PATENT APPLICATION

(11) **EP 3 373 446 A1**
(43) Date of publication of application: **12.09.2018**
(21) Application number: 18160197.2
(22) Date of filing: 06.03.2018
(51) Int. Cl.: H02P 23/28, H02H 3/093, H02H 5/04, H02P 27/08, H02M 1/32

(54) **PUMP CONTROL DEVICE**

(30) Priority: 09.03.2017 JP 2017045067
(71) Applicant: AISIN SEIKI KABUSHIKI KAISHA, Kariya-shi Aichi 448-8650 (JP)
(72) Inventor: KAZUTAKA, Endo, Kariya-shi, Aichi 448-8650 (JP)
(74) Representative: Kramer Barske Schmidtchen Patentanwälte PartG mbB

(57) **Abstract**

A pump control device (1) includes: a current detection unit (10) detecting a current value of current flowing through a coil (L) of a motor (M) driving an electric pump (P); a determination unit (11) determining whether a determination condition in which the detected current value is equal to or larger than a preset value and the current value equal to or larger than the preset value continues for a preset time or more is satisfied; an inverter (12) including three arm units (A) having high-side and low-side switching elements (QH, QL) connected to each other in series between first and second power supply lines (2, 3); and an energization control unit (13) driving the high-side and low-side switching elements by PWM control, and perform the PWM control by lowering a carrier frequency of a PWM signal by a predetermined frequency when the determination condition is satisfied.

## Description

### TECHNICAL FIELD

The disclosure relates to a pump control device, which controls an operation of an electric pump.

### BACKGROUND DISCUSSION

In the related art, an electric pump has been used for flow control of a fluid. This type of electric pump is operated by a rotational force output from a motor. Such a motor is driven as current flowing through a coil of the motor is controlled by a switching element. Such a technique to drive a motor using a switching element is described in, for example, JP 05-219792 A (Reference 1).

An overheating protection device of a switching transistor described in Reference 1 controls revolutions per minute of the motor by duty-controlling the switching element in a steady state, and energizes the motor by setting the duty ratio of a signal applied to the switching element to 100% in a state where the temperature of the switching element is equal to or higher than a predetermined value.

In the technique described in Reference 1, in the steady state, the switching frequency depending on the duty control of the switching element may become a noise source, and for example, may influence a device (e.g., a radio) disposed in a surrounding area. Meanwhile, in a state where the temperature of the switching element is equal to or higher than a predetermined value, the duty ratio of the signal applied to the switching element is set to 100% in order to reduce the loss of switching. However, when the duty ratio is set to 100% Joule heat is increased and there is a possibility that the lifespan of an electronic component (e.g., an electrolytic capacitor) disposed around the switching element is shortened due to the Joule heat.

Thus, a need exists for a pump control device capable of suppressing noise to a surrounding area and suppressing heat generation.

### SUMMARY

A feature of a pump control device according to an aspect of this disclosure resides in that the pump control device includes a current detection unit configured to detect a current value of current flowing through a coil of a motor, which drives an electric pump, a determination unit configured to determine whether or not a determination condition in which the detected current value is equal to or larger than a preset value and the current value equal to or larger than the preset value continues for a preset time or more is satisfied, an inverter including three sets of arm units each having a high-side switching element and a low-side switching element, which are connected to each other in series between a first power supply line and a second power supply line, which is connected to a potential lower than a potential of the first power supply line, the inverter controlling the current flowing through the coil, and an energization control unit configured to drive the high-side switching element and the low-side switching element by PWM control, and perform the PWM control by lowering a carrier frequency of a PWM signal used for the PWM control from a current frequency by a predetermined frequency when it is determined by the determination unit that the determination condition is satisfied.

With such a configuration, since the energization control unit performs the PWM control by lowering the carrier frequency of the PWM signal when the current flowing through the coil of the motor, which drives the electric pump, is equal to or larger than the preset value and continues for the preset time or longer, it is possible to prevent an increase in the loss of switching when switching the high-side switching element and the low-side switching element. Therefore, it is possible to reduce the heat generation of, for example, the high-side switching element, the low-side switching element, or the coil. In addition, when noise to a surrounding area is generated, it is possible to prevent the generation of noise by switching since a switching cycle is changed by changing the carrier frequency.

The energization control unit may lower the carrier frequency according to a difference between the current value detected by the current detection unit and the preset value.

With this configuration, it is possible to easily set the carrier frequency at which heat generation may be effectively suppressed.

The pump control device may further include a temperature information acquisition unit configured to acquire temperature information indicating a temperature of a board on which a component, which is an overheating protection target, is mounted, a calculation unit configured to calculate a cumulative value of a product of the temperature and a time during which the corresponding temperature is maintained, and a processing unit configured to perform a preset processing when the cumulative value exceeds a preset threshold.

With this configuration, when the cumulative value exceeds the preset threshold, it is possible to give a notice or a warning indicating that, for example, a component, which is an overheating protection target, deteriorates, or to perform a processing of stopping an operation of the electric pump.

The preset threshold may be a first threshold, and the energization control unit may stop the PWM control when the cumulative value exceeds a second threshold smaller than the first threshold, and may resume the PWM control when the temperature falls below a preset temperature threshold during stop of the PWM control.

With this configuration, since the PWM control is stopped when the cumulative value exceeds the second threshold, it is possible to prevent a temperature shock such as remarkable deterioration in lifespan from being applied to a component, which is an overheating protection target. In addition, since the PWM control is resumed when the temperature falls below the preset temperature threshold during stop of the PWM control, the electric pump may be operated when a possibility of applying a temperature shock such as remarkable deterioration in lifespan to a component, which is an overheating protection target, is reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram schematically illustrating a configuration of a pump control device;
Fig. 2 is a view illustrating an example of determination by a determination unit;
Figs. 3A and 3B are views illustrating an example of a change in carrier frequency;
Fig. 4 is a view illustrating a mode in which a cumulative value exceeds a threshold (first threshold);
Fig. 5 is a view illustrating a mode of stopping and resuming PWM control depending on the cumulative value;
Fig. 6 is a flowchart illustrating a processing depending on a change in carrier frequency; and
Fig. 7 is a flowchart illustrating a processing depending on overheating protection.

### DETAILED DESCRIPTION

A pump control device according to this disclosure is configured to be capable of suppressing noise to the surrounding area and suppressing heat generation. Hereinafter, the pump control device 1 of the present embodiment will be described.

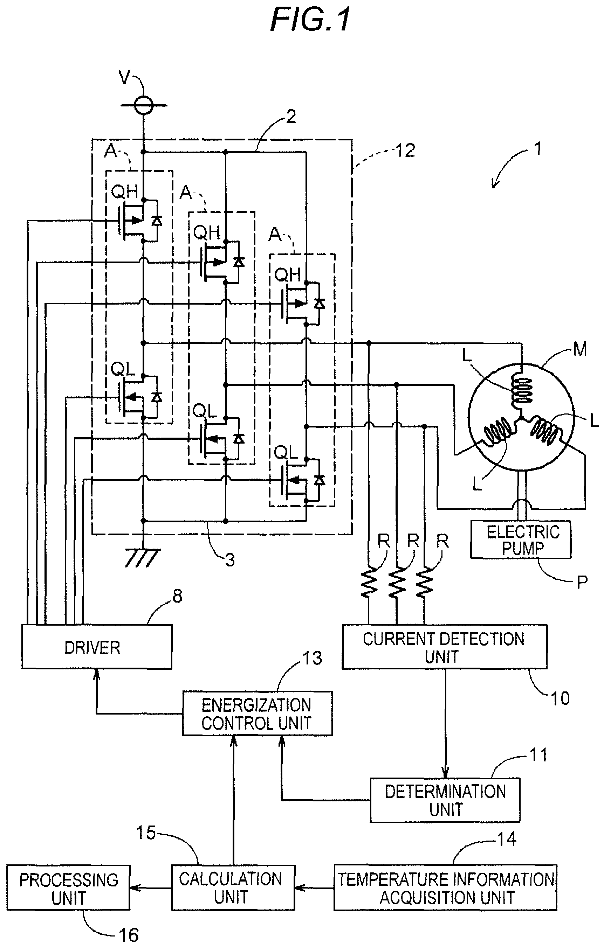

Fig. 1 is a block diagram schematically illustrating a configuration of the pump control device 1. As illustrated in Fig. 1, the pump control device 1 of the present embodiment includes respective functional units of a current detection unit 10, a determination unit 11, an inverter 12, an energization control unit 13, a temperature information acquisition unit 14, a calculation unit 15, and a processing unit 16. In particular, the respective functional units of the current detection unit 10, the determination unit 11, the energization control unit 13, the temperature information acquisition unit 14, the calculation unit 15, and the processing unit 16 are configured in hardware and/or software with a CPU as a core member, in order to drive an electric pump P.

The current detection unit 10 detects the current value of current flowing through a coil L of a motor M, which drives the electric pump P. The motor M, which drives the electric pump P, refers to a motor M that outputs a rotational force, which is a power source of the electric pump P. Here, the motor M includes a plurality of coils L and a plurality of permanent magnets (not illustrated), and is rotated by an attractive force and a repulsive force acting between a magnetic field generated around a predetermined coil L when the coil L is energized and a magnetic flux of the permanent magnets. The current detection unit 10 detects the current value of current flowing through the coil L. In the present embodiment, the current detection unit 10 is connected, via a resistor R, to a cable, which interconnects a drain terminal of a high-side switching element QH of each arm unit A of the inverter 12 to be described later and each of three terminals of the motor M. The detection result of the current detection unit 10 is transmitted to the determination unit 11 to be described later.

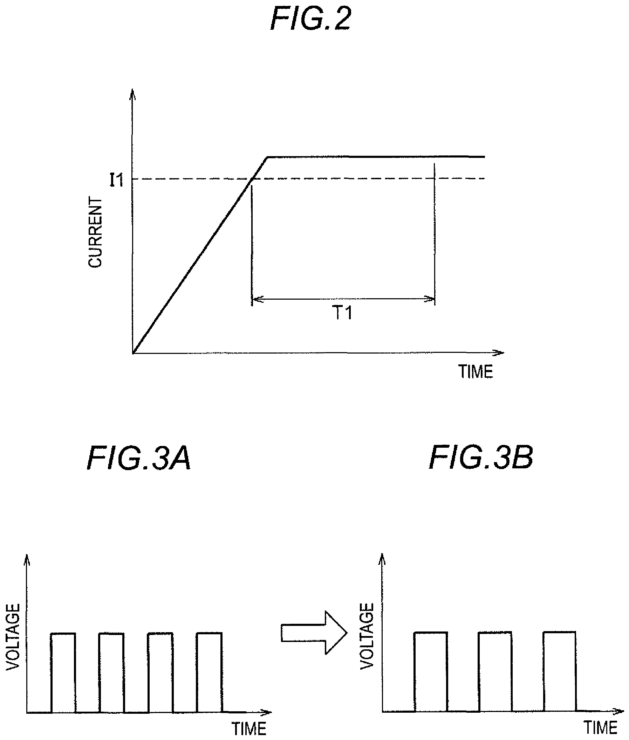

The determination unit 11 determines whether or not a determination condition in which a detected current value is equal to or larger than a preset value and the current value equal to or larger than the preset value continues for a preset time or more is satisfied. The detected current value refers to the current value of current flowing through the coil L of the motor M detected by the current detection unit 10. The preset value is the current value when the motor M is in a high load state, and is set to a current value larger than the current value when a steady operation is performed. The preset value and the preset time may be set according to the allowable loss of an electronic component, which is a protection target, for example. Thus, the determination conditions means that "current having the current value equal to or larger than the preset value continuously flows through the coil L of the motor M for the preset time or more". Fig. 2 illustrates a determination condition in a case where the preset value is set to I1 and the preset time is set to T1. The determination unit 11 determines whether or not the current value of current flowing through the coil L of the motor M and detected by the current detection unit 10 exceeds I1 and whether or not the time after exceeding the corresponding I1 is equal to or larger than T1. The determination result of the determination unit 11 is transmitted to the energization control unit 13 to be described later.

The inverter 12 includes three sets of arm units A each having a high-side switching element QH and a low-side switching element QL, which are connected to each other in series between a first power supply line 2 and a second power supply line 3, which is connected to a potential lower than the potential of the first power supply line 2, and controls the current flowing through the coil L. The first power supply line 2 is a cable that is connected to a power supply V. The second power supply line 3, which is connected to a potential lower than the potential of the first power supply line 2, is a cable to which a potential lower than an output voltage of the power supply V is applied, and corresponds to a grounded cable in the present embodiment.

In the present embodiment, the high-side switching element QH is configured using a P-MOSFET, and the low-side switching element QL is configured using an N-MOSFET. The source terminal of the high-side switching element QH is connected to the first power supply line 2, and the drain terminal of the high-side switching element QH is connected to the drain terminal of the low-side switching element QL. The source terminal of the low-side switching element QL is connected to the second power supply line 3. The high-side switching element QH and the low-side switching element QL connected in this way constitute the arm unit A, and the inverter 12 includes three sets of the arm units A.

The gate terminal of each of the high-side switching element QH and the low-side switching element QL is connected to a driver 8. The driver 8 is provided between the energization control unit 13 to be described later and the inverter 12, and a PWM signal generated by the energization control unit 13 is input to the driver 8. The driver 8 improves the drive capability of the input PWM signal, and outputs the same to the inverter 12. The drain terminal of the high-side switching element QH of each arm unit A is connected to each of the three terminals of the motor M and the aforementioned resistor R.

The energization control unit 13 drives the high-side switching element QH and the low-side switching element QL by PWM control. The energization control unit 13 generates a PWM signal and outputs the generated PWM signal to the driver 8. Thereby, the PWM-control of the inverter 12 becomes possible. The PWM control by the PWM signal is well-known, and thus a description thereof will be omitted.

In addition, when it is determined by the determination unit 11 that the determination condition is satisfied, the energization control unit 13 performs PWM control by lowering a carrier frequency of the PWM signal used for the PWM control from a current frequency by a predetermined frequency. As described above, the determination condition is that "current having the current value equal to or greater than the preset value continuously flows through the coil L of the motor M for the preset time or more". The carrier frequency of the PWM signal means the frequency of the PWM signal, and corresponds to, for example, 20 kHz. Thus, when the current having the current value equal to or higher than the preset value continuously flows through the coil L of the motor M for the preset time or more, the energization control unit 13 drives the high-side switching element QH and the low-side switching element QL by the PWM control using the PWM signal, the carrier frequency of which is lowered from 20 kHz by a predetermined frequency (e.g., several kHz). Fig. 3A illustrates the PWM signal before changing the carrier frequency, and Fig. 3B illustrates an example of the PWM signal after changing the carrier frequency.

At this time, the energization control unit 13 may lower the carrier frequency according to a difference between the current value detected by the current detection unit 10 and the preset value. Specifically, when the value obtained by subtracting the preset value from the current value detected by the current detection unit 10 is larger, a reduction amount in carrier frequency may be increased, and when the value obtained by subtracting the preset value from the current value detected by the current detection unit 10 is smaller, a reduction amount in carrier frequency may be reduced. Thus, when the load of the motor M becomes higher, the carrier frequency may be further lowered, and it is possible to reduce the loss caused by switching of the high-side switching element QH and the low-side switching element QL of the inverter 12.

The temperature information acquisition unit 14 acquires temperature information indicating the temperature of a board on which a component, which is an overheating protection target, is mounted. The component as the overheating protection target refers to a component, the lifespan of which varies depending on the ambient temperature. For example, an electrolytic capacitor or a component using a semiconductor corresponds to the component. In the present embodiment, an electrolytic capacitor will be described by way of example. The board is, for example, a plastic board. A thermistor is mounted on the plastic board, in addition to the electrolytic capacitor, and the temperature information acquisition unit 14 receives an output of the thermistor, and acquires temperature information indicating the temperature of the board. The temperature information acquired by the temperature information acquisition unit 14 is transmitted to the calculation unit 15 to be described later.

The calculation unit 15 calculates the cumulative value of the product of the temperature of the board and the time during which the corresponding temperature is maintained. The temperature of the board is transmitted as temperature information from the temperature information acquisition unit 14 to the calculation unit 15. Meanwhile, the time during which the corresponding temperature is maintained is counted by the calculation unit 15. The calculation unit 15 performs calculation by accumulating the product of the counting result and the temperature. Here, the aforementioned time is continuously counted without resetting after the pump control device 1 is configured. The calculation result of the calculation unit 15 is transmitted to the processing unit 16 to be described later.

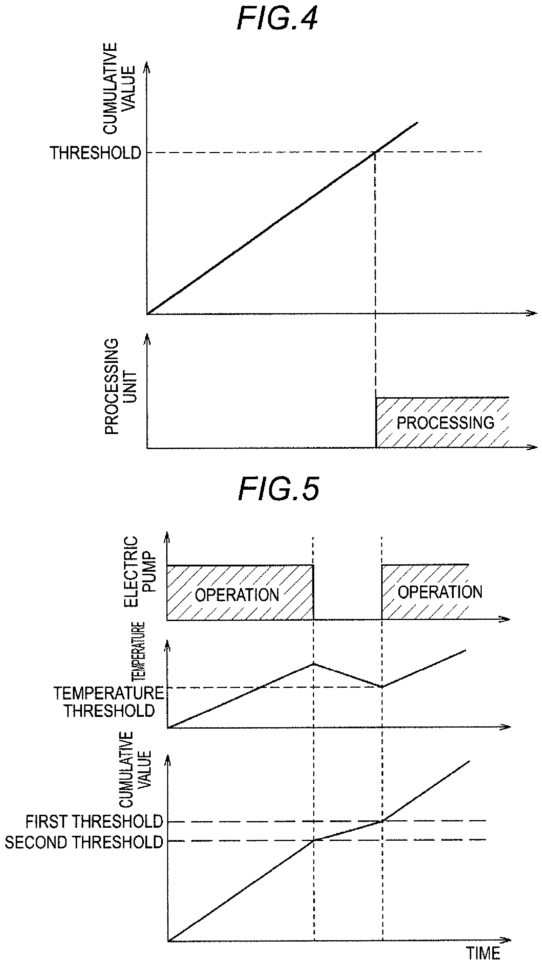

The processing unit 16 performs a preset processing when the cumulative value exceeds a preset threshold. As described above, the cumulative value is calculated by the calculation unit 15, and when the cumulative value exceeds the threshold as illustrated in Fig. 4, the processing unit 16 performs a predetermined processing. The example of Fig. 4 illustrates a mode in which no processing is performed until the cumulative value exceeds the threshold, and a predetermined processing is performed after the cumulative value exceeds the threshold. Here, the predetermined processing is a processing that indicates a state different from a steady operation state in, for example, a vehicle, and may be a processing of giving a notice to the surroundings or a processing of giving a warning to a user. Further, the predetermined processing may be a processing of stopping the operation of the motor M.

Here, when the preset threshold is a first threshold, the energization control unit 13 may be configured to stop the PWM control when the cumulative value exceeds a second threshold smaller than the first threshold, and to resume the PWM control when the temperature falls below a preset temperature threshold during the stop of the PWM control. Such a control mode is illustrated in Fig. 5. When the electric pump P is operated as illustrated in the upper part of Fig. 5, the temperature increases (see the middle part of Fig. 5). Accordingly, the cumulative value increases as illustrated in the lower part of Fig. 5. Since the PWM control is performed by the energization control unit 13 until the cumulative value exceeds the second threshold, which is set to a value smaller than the first threshold, the electric pump P is operated.

As illustrated in the lower part of Fig. 5, when the cumulative value exceeds the second threshold, the energization control unit 13 stops the PWM control. Accordingly, the operation of the electric pump P is stopped. In this state, the temperature decreases as illustrated in the middle part of Fig. 5. When the temperature decreases to a predetermined temperature threshold, the energization control unit 13 resumes the PWM control, and the electric pump P resumes the operation thereof.

Here, it is impossible to circulate a fluid by the electric pump P while the operation of the electric pump P is stopped. In this case, a configuration may be suitably adopted in which the fluid is circulated by another device (e.g., a mechanical pump not using electric energy as a power source).

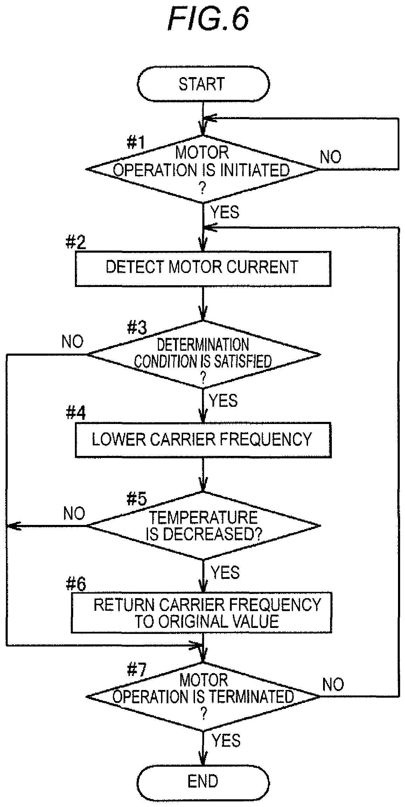

Next, a processing depending on a change in the carrier frequency of the pump control device 1 will be described with reference to the flowchart of Fig. 6. When the operation of the motor M is initiated (step #1: Yes), current (motor current) flowing through the coil L of the motor M is detected by the current detection unit 10 (step #2). When the determination condition is satisfied, that is, when "current having the current value equal to or larger than the preset value continuously flows through the coil L of the motor M for the preset time or more" (step #3: Yes), the energization control unit 13 performs PWM control by lowering a carrier frequency of a PWM signal by a predetermined frequency (step #4).

When the temperature decreases by a predetermined value by the PWM control in which the carrier frequency is lowered (step #5: Yes), the energization control unit 13 performs the PWM control by returning the carrier frequency to an original value (step #6). When continuously operating the motor M (step #7: No), the processing returns to step #2 and is continued. When the operation of the motor M is terminated (step #7: Yes), the processing ends. When the determination condition is not satisfied in step #3 (step #3: No) or when the temperature does not decrease by a predetermined value even by the PWM control in which the carrier frequency is lowered in step #5 (step #5: No), the processing is continued from step #7. The pump control device 1 changes the carrier frequency according to such a flow.

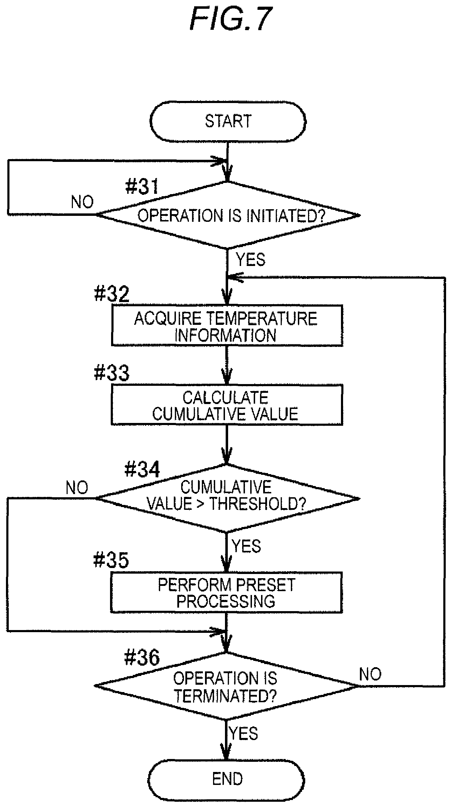

Next, a processing depending on the overheating protection of the pump control device 1 will be described with reference to the flowchart of Fig. 7. When the operation of the motor M is initiated (step #31: Yes), the temperature information acquisition unit 14 acquires temperature information indicating the temperature of a board on which a component, which is an overheating protection target, is mounted (step #32). The calculation unit 15 calculates the cumulative value of the product of the temperature of the board and the time during which the corresponding temperature is maintained (step #33).

When the cumulative value exceeds a preset threshold (step #34: Yes), the processing unit 16 performs a preset processing (step #35). When continuously operating the motor M (step #36: No), the processing returns to step #32 and is continued. When the operation of the motor M is terminated (step #36: Yes), the processing ends. When the cumulative value does not exceed the preset threshold in step #34 (step #34: No), the processing is continued from step #36. The pump control device 1 performs overheating protection according to such a flow.

### <Other Embodiments>

In the above embodiment, an example in which the motor M has a Y connection has been described, but the embodiment may also be applied even if the motor has a Δ connection. In addition, the description has been made on the assumption that, as switching elements constituting the inverter 12, the high-side switching element QH is a P-MOSFET and the low-side switching element QL is an N-MOSFET, but other configurations may be used.

In the above embodiment, the energization control unit 13 has been described as lowering the carrier frequency depending on a difference between the current value detected by the current detection unit 10 and the preset value. However, the energization control unit 13 may be configured to lower the carrier frequency by a preset fixed value, for example.

In the above embodiment, the pump control device 1 has been described as including the temperature information acquisition unit 14, the calculation unit 15, and the processing unit 16, however, the pump control device 1 may be configured without including the temperature information acquisition unit 14, the calculation unit 15, and the processing unit 16.

In the above embodiment, the energization control unit 13 has been described as stopping the PWM control when the cumulative value exceeds the second threshold and resuming the PWM control when the temperature falls below the preset temperature threshold during stop of the PWM control. However, the energization control unit 13 may be configured so as not to stop or resume the PWM control according to the cumulative value.

This disclosure may be used in a pump control device, which controls the operation of an electric pump.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A pump control device (1) comprising:
a current detection unit (10) configured to detect a current value of current flowing through a coil (L) of a motor (M), which drives an electric pump (P);
a determination unit (11) configured to determine whether or not a determination condition in which the detected current value is equal to or larger than a preset value and the current value equal to or larger than the preset value continues for a preset time or more is satisfied;
an inverter (12) including three sets of arm units (A) each having a high-side switching element (QH) and a low-side switching element (QL), which are connected to each other in series between a first power supply line (2) and a second power supply line (3), which is connected to a potential lower than a potential of the first power supply line, the inverter controlling the current flowing through the coil; and
an energization control unit (13) configured to drive the high-side switching element and the low-side switching element by PWM control, and perform the PWM control by lowering a carrier frequency of a PWM signal used for the PWM control from a current frequency by a predetermined frequency when it is determined by the determination unit that the determination condition is satisfied.

2. The pump control device according to claim 1,
wherein the energization control unit lowers the carrier frequency according to a difference between the current value detected by the current detection unit and the preset value.

3. The pump control device according to claim 1 or 2, further comprising:
a temperature information acquisition unit (14) configured to acquire temperature information indicating a temperature of a board on which a component, which is an overheating protection target, is mounted;
a calculation unit (15) configured to calculate a cumulative value of a product of the temperature and a time during which the corresponding temperature is maintained; and
a processing unit (16) configured to perform a preset processing when the cumulative value exceeds a preset threshold.

4. The pump control device according to claim 3,
wherein the preset threshold is a first threshold, and
the energization control unit stops the PWM control when the cumulative value exceeds a second threshold smaller than the first threshold, and resumes the PWM control when the temperature falls below a preset temperature threshold during stop of the PWM control.
